# EUROPÄISCHE PATENTSCHRIFT

(11) **EP 3 255 727 B1**
(45) Veröffentlichungstag und Bekanntmachung des Hinweises auf die Patenterteilung: **18.09.2019**
(21) Anmeldenummer: 17174913.8
(22) Anmeldetag: 08.06.2017
(51) Int. Cl.: H01Q 1/32, H01Q 21/20, H01Q 21/28, H01Q 25/00, G01S 13/93, G01S 13/86

(54) **ANTENNEN-DACHMODUL FÜR EIN KRAFTFAHRZEUG UND KRAFTFAHRZEUG**
ROOF-TOP ANTENNA MODULE FOR A MOTOR VEHICLE, AND MOTOR VEHICLE
MODULE DE TOIT D'ANTENNES POUR UN VÉHICULE AUTOMOBILE ET VÉHICULE AUTOMOBILE

(30) Priorität: 10.06.2016 DE 102016210366
(43) Veröffentlichungstag der Anmeldung: 13.12.2017
(73) Patentinhaber: AUDI AG, 85045 Ingolstadt (DE)
(72) Erfinder: Khlifi, Rachid, 85748 Garching (DE)

(56) Entgegenhaltungen:
- EP-A1- 3 040 736
- DE-A1-102009 012 615
- KR-A- 20130 102 983
- US-A1- 2004 150 573
- US-A1- 2008 077 327
- US-A1- 2016 082 912

## Beschreibung

Die Erfindung betrifft ein Antennen-Dachmodul für ein Kraftfahrzeug, aufweisend wenigstens eine primäre Antennenanordnung, insbesondere zum Empfang von Radioprogrammen. Daneben betrifft die Erfindung ein Kraftfahrzeug.

Für moderne Kraftfahrzeuge wurden bereits eine Vielzahl von Fahrerassistenzsystemen vorgeschlagen. Einige dieser Fahrerassistenzsysteme basieren auf einer durch Sensoren realisierten Umfeldwahrnehmung des Kraftfahrzeugs, wobei insbesondere dynamische und statische Objekte im Umfeld des eigenen Kraftfahrzeugs erfasst werden. Abhängig von den erkannten Umfeldobjekten, welche beispielsweise in Form eines Umfeldmodells in einem Steuergerät des Fahrerassistenzsystems vorliegen können, wird das Vorliegen bestimmter Maßnahmenkriterien überprüft und bei Erfüllung eines derartigen Kriteriums die entsprechende Maßnahme durchgeführt, beispielsweise eine Warnung an den Fahrer ausgegeben, ein Eingriff in den Fahrbetrieb vorgenommen und dergleichen. Insbesondere ist es auch bekannt, dass seitens der Steuergeräte von Fahrerassistenzsystemen Situationsanalysen (SITA) der aktuellen Verkehrssituation durchgeführt werden, um die Wahrscheinlichkeit für Falsch- oder Fehlwarnungen zu reduzieren.

Ein häufig für die Erfassung von Umfeldobjekten für Fahrerassistenzsysteme eingesetzter Sensor im Kraftfahrzeug ist der Radarsensor. Radarsensoren haben sich aufgrund ihrer hohen Reichweite, einer Messung mit hoher Genauigkeit und mit hohem Auflösungsvermögen als besonders nützlich erwiesen und liefern als relevante Parameter der Umfeldobjekte insbesondere deren Abstand zum eigenen Kraftfahrzeug, die Geschwindigkeit und den Winkel, insbesondere sowohl in Azimut als auch in Elevation. Radarsensoren werden klassischerweise entweder sichtbar im Frontbereich, beispielsweise für die Anwendung für ein ACC-System als Fahrerassistenzsystem, oder unsichtbar, also verdeckt, hinter Kunststoffteilen des Kraftfahrzeugs, beispielsweise einem Stoßfänger, verbaut. In letzter Zeit sind auf Halbleitertechnologie basierende, kleinbauende Radarsensoren bekannt geworden, die sich besonders für einen verdeckten Verbau eignen und verdeckt verbaut auch Seitenbereiche des Kraftfahrzeugs, insbesondere zusätzlich zu Heck- und Frontbereichen, abdecken können.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Um im Allgemeinen eine komplette Überwachung/Erfassung des Fahrzeugumfeldes, mithin die Abdeckung eines 360°-Winkelbereichs in der Horizontalen, zu gewährleisten, wurde vorgeschlagen, mehrere, um den Außenumfang des Kraftfahrzeugs verteilte Radarsensoren einzusetzen, insbesondere wenigstens acht Radarsensoren. Dabei kann beispielsweise vorgesehen sein, drei Radarsensoren in einem vorderen Stoßfänger, drei Radarsensoren in einem hinteren Stoßfänger und zwei Radarsensoren in seitlichen Komponenten des Kraftfahrzeugs, beispielsweise den Türen, zu verbauen. In jedem Fall entsteht durch die Verwendung einer Vielzahl von Radarsensoren zur möglichst kompletten Abdeckung des Umfelds des Kraftfahrzeugs eine äußerst kostenintensive Konfiguration. Zum einen sind die Radarsensoren selbst relativ teuer, zum anderen erzeugt diese Konfiguration einen großen Aufwand in der Integration im Fahrzeug, insbesondere hinsichtlich der Verkabelung, der konstruktiven Berücksichtigung an einer Mehrzahl von Einbauorten, der Befestigungskonzepte, der Kalibrierungen und Justierungen der einzelnen Sensoren, und dergleichen. Ferner tritt durch diese Konfiguration auch eine erhöhte Komplexität und eine Vielzahl von Varianten von Fahrzeugkomponenten, insbesondere der Stoßfänger, auf. Auch die Steuerung eines solchen Netzwerks von Radarsensoren ist aufwendig, insbesondere hinsichtlich der zeitlichen Synchronisation. Problematisch sind ferner Qualitätseinbußen der Radardaten der Radarsensoren, nachdem verschiedene Materialien der Komponente, in der sie verbaut sind, durchstrahlt werden.

In US 2004/0150573 A1 wird ein Dachgepäckträger für ein Kraftfahrzeug beschrieben, welcher eine elektronische Komponente zum Empfang und zur Übertragung von Signalen an einen Innenraum des Kraftfahrzeugs aufweist. Zusätzlich dazu können weitere elektronische Komponenten, wie eine Radioantenne oder ein Radarsensor, in den Rahmenelementen des Dachgepäckträgers vorgesehen sein.

DE 10 2009 012 615 A1 beschreibt eine Fahrzeugaußenantenneneinheit zur Montage auf einer Außenseite eines Fahrzeugs mit einem Gehäuse, in dem eine Antenne angeordnet ist. Das Gehäuse umfasst weiterhin eine Kamera, welche derart angeordnet ist, dass mit ihr der Bereich hinter dem Fahrzeug erfasst werden kann.

Aus KR 10 2013 0102983 A ist ein Kraftfahrzeug mit einer Radarsensoreinrichtung bekannt, welche auf einem Dach eines Kraftfahrzeugs angeordnet ist. Die Radarsensoranordnung umfasst zwei Radarantennen, welche parallel zur Fahrzeuglängsachse angeordnet sind. Der Erfassungsbereich der Radarsensoranordnung erstreckt sich dabei in den linken und rechten Seitenbereich des Kraftfahrzeugs, wobei der Frontbereich und der Heckbereich des Kraftfahrzeugs nicht abgedeckt sind.

Aus US 2008/0077327 A1 ist ein Dachgepäckträger für ein Kraftfahrzeug bekannt, welcher einen radarbasierten Detektor umfasst. Der radarbasierte Detektor umfasst einen Frontradarsensor mit einer in einer frontseitigen Strebe des Dachgepäckträgers integrierten Antennenanordnung. Weiterhin kann der Dachgepäckträger eine weitere Antennenanordnung umfassen, mit welcher ein auf dem Dachgepäckträger angeordnetes Objekt erfasst werden kann.

US 2016/0082912 A1 beschreibt ein System zur Erfassung eines bevorstehenden Zusammenstoßes zur vorbeugenden Auslösung eines Airbags. Dazu sind mehrere Kameras oder Radar- bzw. Lidarsensoren vorgesehen, welche jeweils einen Teilbereich des Fahrzeugumfelds an Front, Heck oder zu den Seiten des Kraftfahrzeugs erfassen. Die eingesetzten Sensoren sind räumlich getrennt voneinander um den Umfang des Kraftfahrzeugs und/oder den Umfang eines Daches des Kraftfahrzeugs angeordnet.

Der Erfindung liegt daher die Aufgabe zugrunde, eine verbesserte Möglichkeit zur möglichst weitgehenden Abdeckung des Umfelds des Kraftfahrzeugs in der Horizontalen durch Radarsensoren anzugeben.

Diese Aufgabe wird erfindungsgemäß durch ein Antennen-Dachmodul gemäß Anspruch 1 und ein Kraftfahrzeug gemäß Anspruch 11 gelöst. Besonders bevorzugt ist es dabei, wenn der Erfassungsbereich der Radarantennenanordnung in der Horizontalen wenigstens einen Winkelbereich von 300°, insbesondere von 360°, umfasst. Zwar ist es denkbar, auch hauptsächlich das Vorfeld und den Rückraum des Kraftfahrzeugs abzudecken, jedoch wird es besonders bevorzugt, wenn die geeignete Positionierung des Antennen-Dachmoduls genutzt wird, um auch einen möglichst großen Anteil des Umfelds bezüglich der Horizontalen abzudecken.

Erfindungsgemäß wird mithin vorgeschlagen, wenigstens die Radarantennenanordnung eines Radarsensors, bevorzugt weitere Komponenten des Radarsensors, insbesondere den gesamten Radarsensor, in ein Antennen-Dachmodul des Kraftfahrzeugs zu integrieren. Derartige Antennen-Dachmodule für Kraftfahrzeuge sind bereits bekannt. Dabei handelt es sich um meist aus Kunststoff bestehende, stromlinienförmig ausgebildete Komponenten, in denen eine primäre Antennenanordnung des Kraftfahrzeugs integriert ist, die üblicherweise dem Empfang von Radiosendern bzw. Verkehrsinformationen dient, wobei selbstverständlich auch weitere oder andere primäre Antennenanordnungen verwendet werden können, beispielsweise zur Kommunikation mit anderen Kraftfahrzeugen und/oder der Infrastruktur, zur Kommunikation in Mobilkommunikationsnetzwerken und/oder dergleichen. Antennen-Dachmodule für Kraftfahrzeuge werden üblicherweise bezüglich der Querrichtung des Kraftfahrzeugs mittig und bezüglich der Längsrichtung des Kraftfahrzeugs mittig bis heckseitig auf dem Dach des Kraftfahrzeugs angeordnet.

Erfindungsgemäß wurde nun erkannt, dass sich das Antennen-Dachmodul zum einen in einer optimalen Position befindet, um eine komplette Erfassung des zumindest weiter entfernten horizontalen Umfelds des Kraftfahrzeugs zu erlauben. Zum anderen aber erlauben es die Materialien des Antennen-Dachmoduls häufig, von Radarwellen durchstrahlt zu werden, so dass die Radarsensoren dort verdeckt verbaut werden können.

Daher ist es auch im Rahmen der Erfindung besonders bevorzugt, wenn das Antennen-Dachmodul ein Gehäuse aus Kunststoff, innerhalb dessen die Antennenanordnungen angeordnet sind, aufweist, und/oder die Antennenanordnungen in Kunststoff vergossen sind. Kunststoff ist für Radarstrahlung und auch die sonstige von den primären Antennenanordnungen empfangenen und/oder gesendeten elektromagnetischen Strahlen durchlässig, so dass ein verdeckter Verbau sowohl der primären Antennenanordnung als auch der Radarantennenanordnung möglich ist und somit ein ansprechendes Äußeres sowie ein Schutz der Antennenanordnungen gewährleistet ist. Hierzu kommt, dass aufgrund der seit kurzem verfügbaren, in Halbleitertechnologie realisierten, hochauflösenden Radarsensoren diese äußerst kleinbauend realisiert werden können, beispielsweise in Größen von kleiner als 5 cm mal 5 cm, bevorzugt kleiner oder gleich 3 cm mal 3 cm, so dass eine Integration im Vergleich zu herkömmlichen, größeren und klobigeren Radarsensoren erst ermöglicht wird, ohne das Antennen-Dachmodul unnötig zu vergrößern.

Mithin ist es auch im Rahmen der vorliegenden Erfindung besonders bevorzugt, wenn wenigstens ein Radartransceiver des Radarsensors, insbesondere der gesamte Radarsensor, in Halbleitertechnologie, bevorzugt CMOS-Technologie, realisiert ist. Auf diese Weise kann nicht nur eine hervorragende Signalqualität erreicht werden, sondern auch eine kleinbauende Realisierung. Um dies zu begünstigen, kann zudem vorgesehen sein, dass der Radarsensor in einem Frequenzbereich von 77 bis 81 GHz betrieben wird.

Mithin wird erfindungsgemäß die hervorragend geeignete Positionierung des Antennen-Dachmoduls und die Verfügbarkeit kleinbauend realisierbarer und somit in das Antennen-Dachmodul integrierbarer Komponenten genutzt, um eine möglichst weitgehende, insbesondere komplette Umfelderfassung des Kraftfahrzeugs in der Horizontalen durch nur noch einen einzigen Radarsensor zu ermöglichen. Das bedeutet, die Anzahl der Radarsensoren im Kraftfahrzeug und somit der Integrationsaufwand wird deutlich reduziert. Auch die Materialabhängigkeit, die bei einem Verbau an unterschiedlichen Positionen am Kraftfahrzeug gegeben wäre, ist nicht mehr vorhanden bzw. klar definiert. Zwar wird vom Dach des Kraftfahrzeugs aus der Ultranahbereich nicht mehr auf einfache Art und Weise abgedeckt, was jedoch unproblematisch ist, da dies beispielsweise durch das Vorsehen zusätzlicher Sensorik, insbesondere von Ultraschallsensorik, ausgeglichen werden kann. Die Realisierung ist insgesamt sehr kostengünstig, weniger komplex und in weniger Varianten verfügbar sowie besser geeignet für den Fernbereich. Ferner werden Bodenreflektionen, die die Radardaten stören könnten, weitgehend vermieden. Der Applikationsaufwand insgesamt, beispielsweise die Berücksichtigung der Verbauumgebung, wird ebenso deutlich reduziert.

Erfindungsgemäß ist vorgesehen, dass wenigstens drei Antennenleiterplatten vorhanden sind, auf denen dann jeweils eine Teilantennenanordnung vorgesehen ist. Durch eine geeignete geometrische Anordnung der Leiterplatten (und somit Ausrichtung der den Teilantennenanordnungen zugeordneten Teilerfassungsbereiche) lässt sich der insgesamt auch bevorzugte, einen Winkelbereich von 360° in der Horizontalen abdeckende Gesamterfassungsbereich realisieren. Insbesondere ist es auch in dieser Ausgestaltung bevorzugt, wenn die Teilerfassungsbereiche im Azimut weitwinklig sind, beispielsweise einen Öffnungswinkel im Azimut von mehr als 130°, insbesondere 150° oder mehr, aufweisen. Hierdurch wird es insbesondere auch ermöglicht, Überlappungsbereiche der Teilerfassungsbereiche zu schaffen, deren Radardaten gegeneinander plausibilisiert werden können und/oder für eine genaue Detektion in diesen Überlappungsbereichen genutzt werden können. Eine konkrete Ausführungsform der Erfindung kann dabei vorsehen, dass drei Antennenleiterplatten nach Art eines insbesondere gleichseitigen Dreiecks mit nach außen weisenden Teilantennenanordnungen angeordnet sind. Dabei schließen die Leiterplatten, die bevorzugt mitsamt der entsprechenden Teilantennenanordnungen gleich ausgebildet sind, bevorzugt mit einer benachbarten Antennenleiterplatte jeweils einen Winkel von 60° ein, so dass sich ein gleichseitiges Dreieck ergibt. Die sich ergebenden Teilerfassungsbereiche können beispielsweise zur Front des Kraftfahrzeugs, einmal diagonal nach hinten rechts und einmal diagonal nach hinten links gerichtet sein, wobei selbstverständlich auch denkbar ist, einen Teilerfassungsbereich nach diagonal vorne rechts und einen Erfassungsbereich nach diagonal vorne links zu richten, so dass sich im Einbauzustand im Bereich vor dem Kraftfahrzeug ein Überlappungsbereich der beiden diagonal ausgerichteten Teilerfassungsbereiche ergibt, welcher in einer besonders relevanten Region eine redundante und somit verbesserte Erfassung ermöglicht.

Denkbar ist es in einer anderen konkreten Ausführungsform der Erfindung jedoch auch, dass vier Antennenleiterplatten nach Art eines Quadrats mit nach außen weisenden Teilantennenanordnungen angeordnet sind. In diesem Fall kann mithin ein Teilerfassungsbereich nach vorne, also vor das Kraftfahrzeug, ein Teilerfassungsbereich hinter das Kraftfahrzeug und zwei Teilerfassungsbereiche seitlich ausgerichtet werden. Selbstverständlich ist es auch in einer derartigen Konstellation grundsätzlich möglich, die Erfassungsbereiche bezüglich der Längsachse und der Querachse des Kraftfahrzeugs diagonal auszurichten, so dass Überlappungsbereiche von Teilerfassungsbereichen vor dem Kraftfahrzeug, hinter dem Kraftfahrzeug und seitlich mittig des Kraftfahrzeugs entstehen. In diesem Fall schließen benachbarte Antennenleiterplatten bevorzugt in einem 90°-Winkel aneinander an.

Vorzugsweise kann wenigstens eine Steuerkomponente für die Radarantennenanordnung und/oder wenigstens ein Radartransceiver auf der wenigstens einen Antennenleiterplatte angeordnet sein. Dabei sind die Steuerkomponente und/oder der Radartransceiver besonders bevorzugt, wie bereits dargelegt, in Halbleiter-Technologie realisiert, insbesondere in CMOS-Technologie, so dass eine kompakte, der Qualität der Radardaten zuträgliche Umsetzung gegeben ist. Auf diese Weise können sowohl das Radar-Frontend als auch die Ansteuerung der Antennenelemente nahe zur Teilantennenanordnung vorgesehen sein, wobei mit besonderem Vorteil bei auf der Antennenleiterplatte angeordnetem Radartransceiver auch wenigstens ein Analog-Digital-Wandler auf der Antennenleiterplatte realisiert sein kann. Dies ermöglicht es mit besonderem Vorteil, die Schnittstelle, über die die Steuerdaten auf die Antennenleiterplatte gelangen bzw. über die die Radardaten von der Antennenleiterplatte gelangen, digital auszuführen, nicht jedoch hochfrequenz-analog. Auf diese Weise können parasitäre Rauschquellen an der Schnittstelle vermieden werden.

Zweckmäßig ist es ferner, wenn die Antennenleiterplatten auf einer insbesondere horizontal angeordneten Hauptleiterplatte befestigt sind, insbesondere aufgesteckt, wobei die Hauptleiterplatte wenigstens einen Teil der Steuereinrichtung des Radarsensors umfasst. Mit besonderem Vorteil kann auf diese Art und Weise der gesamte Radarsensor in das Antennen-Dachmodul integriert werden, wobei es auch denkbar ist, die Hauptleiterplatte (Hauptplatine) verdeckt im Dach des Kraftfahrzeugs verbaut zu halten. Insbesondere kann dabei vorgesehen sein, dass die Hauptleiterplatte Steckplätze für vertikal positionierte Antennenleiterplatten aufweist, wobei es, wie dargelegt, besonders bevorzugt ist, wenn die Verbindungsschnittstelle zwischen der Hauptleiterplatte und der wenigstens einen Antennenleiterplatte digital ist. Dies ist dann möglich, wenn die Antennenleiterplatten entsprechend einen Analog-Digital-Wandler aufweisen, wie oben beschrieben.

Vorzugsweise kann die Hauptleiterplatte auch eine Kommunikationsschnittstelle des Radarsensors zu einem Bussystem des Kraftfahrzeugs aufweisen. Das bedeutet, über die Kommunikationsschnittstelle können sowohl Steuersignale für den Radarsensor empfangen und entsprechend umgesetzt werden wie auch Radardaten an andere Fahrzeugsysteme, beispielsweise ein Steuergerät eines Fahrerassistenzsystems, das die Radardaten des Radarsensors nutzt, verteilt werden. Bei dem Bussystem des Kraftfahrzeugs kann es sich dabei beispielsweise um einen CAN-Bus handeln. Bevorzugt ist es ferner, wenn die Hauptleiterplatte eine digitale Signalverarbeitungskomponente des Radarsensors aufweist. Damit findet auf der Hauptleiterplatte zumindest teilweise eine Verarbeitung bzw. Prozessierung der Radardaten statt, welche entsprechend aufbereitet über die Kommunikationsschnittstelle an andere Fahrzeugsysteme des Kraftfahrzeugs weitergeleitet werden können. Dabei sei darauf hingewiesen, dass es zur Erweiterung der Integration auch zweckmäßig sein kann, der primären Antennenanordnung zugeordnete Steuerkomponenten auf der Hauptleiterplatte zu realisieren und/oder über die Kommunikationsschnittstelle auch eine Kommunikationsverbindung zu der wenigstens einen primären Antennenanordnung herzustellen. Beispielsweise kann also ein der primären Antennenanordnung zugeordneter Transceiver, der bevorzugt auch in Halbleitertechnologie, insbesondere CMOS-Technologie, realisiert ist, auf der Hauptleiterplatte angeordnet sein, wobei selbstverständlich auch eine auf die primäre Antennenanordnung bezogene Intelligenz auf diese Art und Weise einfach in das Antennen-Dachmodul integriert werden kann. Mithin wird das Vorhandensein von elektronischen Komponenten auch für die primäre Antennenanordnung genutzt.

Es sei an dieser Stelle nochmals angemerkt, dass bevorzugt die Antennenanordnungen derart ausgebildet sind, dass Winkel in zwei zueinander senkrechten Ebenen vermessen werden können, insbesondere in Azimut und in Elevation, wobei der Elevations-Winkelbereich auch asymmetrisch zur Horizontalen gewählt werden kann, um die Oberfläche des Daches des Kraftfahrzeugs aus einem entsprechenden Teilerfassungsbereich auszunehmen.

Neben dem Antennen-Dachmodul betrifft die vorliegende Erfindung auch ein Kraftfahrzeug, aufweisend ein Antennen-Dachmodul gemäß der vorliegenden Erfindung. Sämtliche Ausführungen bezüglich des Antennen-Dachmoduls lassen sich analog auf das erfindungsgemäße Kraftfahrzeug übertragen, mit welchem mithin ebenso die bereits genannten Vorteile erhalten werden können. Insbesondere kann die Zahl der benötigen Radarsensoren drastisch reduziert werden. Das Kraftfahrzeug kann ferner wenigstens ein Fahrerassistenzsystem mit einem zugeordneten Steuergerät aufweisen, das zum Empfangen und zur Auswertung der Radardaten des Radarsensors des Antennen-Dachmoduls ausgebildet ist. Ferner kann eine Hauptleiterplatte des Radarsensors, falls sie nicht im Antennen-Dachmodul selbst integriert ist, verdeckt in einem Dachbereich des Kraftfahrzeugs verbaut sein, beispielsweise zwischen einem Dachhimmel und der Karosserie in einem Befestigungsbereich des Antennen-Dachmoduls.

Eine zweckmäßige Weiterbildung des erfindungsgemäßen Kraftfahrzeugs sieht vor, dass das Kraftfahrzeug zur Detektion von Umgebungsobjekten im Nahbereich wenigstens einen im unteren Bereich des Kraftfahrzeugs verbauten Ultraschallsensor aufweist. Insbesondere für den Ultranahbereich, der von dem dachseitigen, wenigstens teilweise in das Antennen-Dachmodul integrierten Radarsensor nicht abgetastet werden kann, können vorzugsweise günstig verfügbare Ultraschallsensoren vorgesehen werden, um entsprechende fehlende Anteile des Umfelds des Kraftfahrzeugs abzutasten.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein Ausführungsbeispiel eines erfindungsgemäßen Kraftfahrzeugs,
- Fig. 2: eine erste Ausführungsform eines nicht erfindungsgemäßen Antennen-Dachmoduls,
- Fig. 3: eine Ansicht der in der Ausführungsform gemäß Fig. 2 verwendeten Leiterplatten,
- Fig. 4: eine schematische Aufsicht auf die Leiterplatten der Fig. 3,
- Fig. 5: eine schematische Aufsicht auf Leiterplatten und Erfassungsbereiche in einer zweiten erfindungsgemäßen Ausführungsform, und
- Fig. 6: eine schematische Aufsicht auf Leiterplatten in einer dritten Ausführungsform eines erfindungsgemäßen Antennen-Dachmoduls.

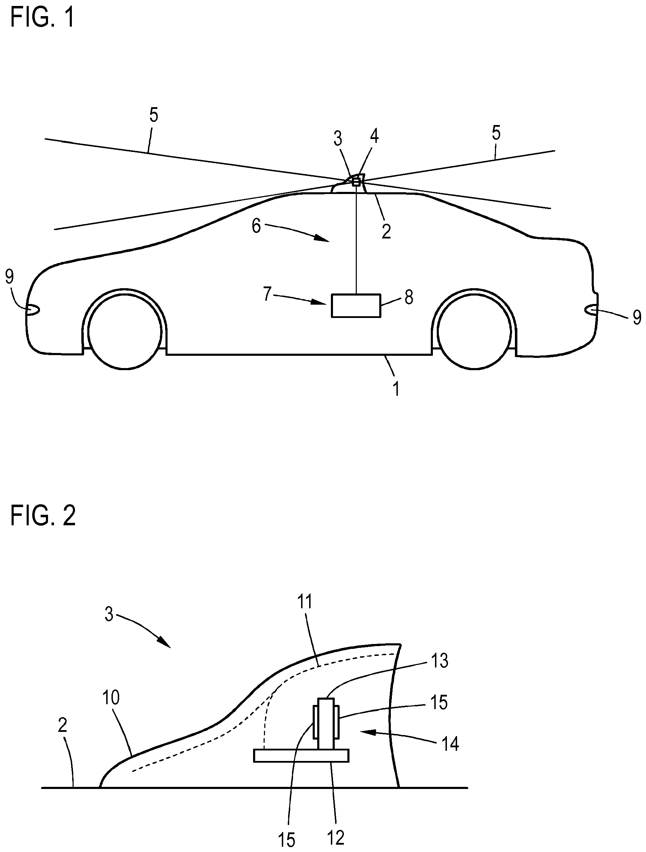

Fig. 1 zeigt ein Ausführungsbeispiel eines erfindungsgemäßen Kraftfahrzeugs 1. Das Kraftfahrzeug 1 weist ein auf seinem Dach 2 angeordnetes Antennen-Dachmodul 3 auf, in das neben einer primären, hier noch nicht näher gezeigten Antennenanordnung auch ein Radarsensor 4 mit einer entsprechenden Radarantennenanordnung integriert ist. Der Radarsensor 4 ist dabei unter Verwendung von Halbleitertechnologie kleinbauend realisiert, so dass das Antennen-Dachmodul 3 gegenüber einem herkömmlichen Antennen-Dachmodul kaum vergrößert ist. Insbesondere sind der wenigstens eine Radartransceiver des Radarsensors 4 und sonstige Komponenten der Steuereinrichtung des Radarsensors 4 in CMOS-Technologie realisiert, insbesondere als CMOS-Chips. Der Radarsensor 4 wird in einem Frequenzbereich von 77 bis 81 GHz mit einer Frequenzbandbreite von bis zu 4 GHz betrieben, um hervorragende Detektionseigenschaften zu gewährleisten. Dabei deckt der gesamte Erfassungsbereich des Radarsensors 4 in bevorzugten Ausführungsformen, auf die im Folgenden noch näher eingegangen werden wird, horizontal das gesamte Umfeld des Kraftfahrzeugs 1 in einem 360°-Winkelbereich ab, mindestens jedoch das Vorfeld des Kraftfahrzeugs 1 und den Bereich hinter dem Kraftfahrzeugs 1, wie durch die in Fig. 1 angedeuteten Teilerfassungsbereiche 5 näher erläutert wird. Diese zeigen auch, dass die Radarantennenanordnung bzw. ihre noch zu diskutierenden Teilantennenanordnungen so realisiert sind, dass eine Winkelmessung nicht nur im Azimut, sondern auch in der Elevation erfolgen kann.

Die Radardaten des Radarsensors 4 werden über ein Bussystem 6 des Kraftfahrzeugs 1 an wenigstens ein einem Fahrerassistenzsystem 7 zugeordnetes Steuergerät 8 übertragen, wo sie im Rahmen der Funktionen des Fahrerassistenzsystems 7 ausgewertet werden.

Bei dem Steuergerät 8 kann es sich insbesondere um ein Steuergerät eines zentralen Fahrerassistenzsystems handeln, in welchem mithin die Funktionen verschiedener Fahrerassistenzsysteme 7 realisiert werden und die Radardaten insbesondere Eingang in ein Sensordaten verschiedener Umgebungssensoren des Kraftfahrzeugs 1 fusionierendes Umgebungsmodell finden können.

Um den vom Dach aus nicht einsehbaren Ultranahbereich des Umfelds des Kraftfahrzeugs dennoch durch Sensoren abdecken zu können, weist das Kraftfahrzeug 1 im Übrigen ferner Ultraschallsensoren 9 auf, die beispielsweise in Stoßfängern des Kraftfahrzeugs 1 verbaut sein können und ihre Sensordaten ebenso an das Steuergerät 8 liefern können.

Fig. 2 zeigt ein Beispiel eines nicht beanspruchten Antennen-Dachmoduls 3 auf dem Dach 2 etwas genauer. Angedeutet ist die innerhalb einer Kunststoffkomponente 10, die als Gehäuse und/oder Kunststoffverguss realisiert sein kann, angeordnete primäre Antennenanordnung 11, die beispielsweise dem Empfang von Radioprogrammen und/oder Verkehrsinformationen dienen kann. Es können auch mehrere primäre Antennenanordnungen 11 vorgesehen sein. Der Radarsensor 4 umfasst, innerhalb der Kunststoffkomponente 10 verdeckt verbaut bzw. eingegossen, eine Hauptleiterplatte 12, in die in der hier dargestellten ersten Ausführungsform mittels eines Steckplatzes eine einzige Antennenleiterplatte 13 eingesteckt ist. Die Antennenleiterplatte 13 ist vertikal angeordnet und trägt die Antennenelemente der Radarantennenanordnung 14, wobei vorliegend zwei Teilantennenanordnungen 15 auf gegenüberliegenden Seiten der Antennenleiterplatte 14 vorgesehen sind. Im hier gezeigten Verbauzustand verläuft die Antennenleiterplatte 13 in Querrichtung des Kraftfahrzeugs 1, so dass eine Teilantennenanordnung 15 bzw. ihr entsprechender Teilerfassungsbereich 5 auf das Vorfeld des Kraftfahrzeugs gerichtet ist, die andere auf den Bereich hinter dem Kraftfahrzeug. Dabei können die Teilantennenanordnungen 15 bevorzugt weitwinklig ausgeführt sein, beispielsweise mit einem Öffnungswinkel im Azimut von 150° oder mehr, um einen möglichst großen Anteil des Umfelds in der Horizontalen, also im Azimut, erfassen zu können.

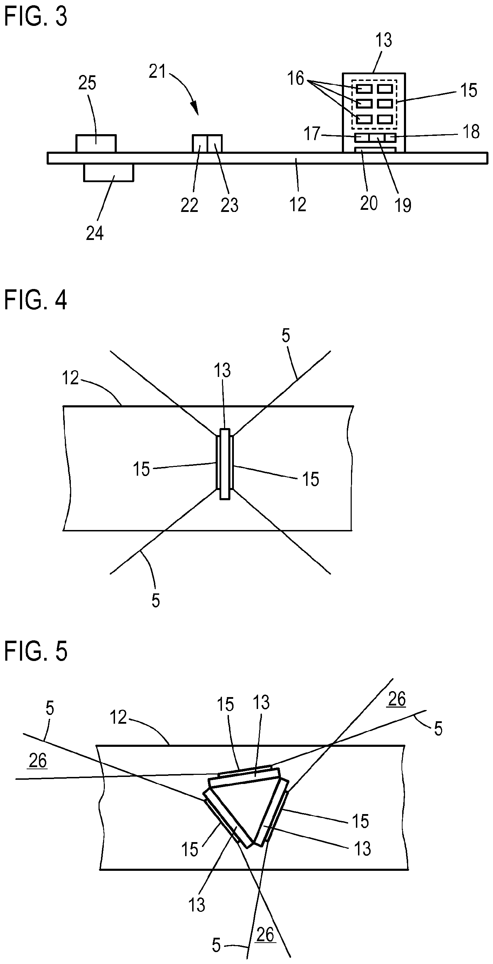

Fig. 3 zeigt die Leiterplatten 12, 13 und die auf ihnen angeordneten weiteren Komponenten nun genauer. Die auf die Hauptleiterplatte 12 aufgesteckte Antennenleiterplatte 13 umfasst neben den Antennenelementen 16 der Teilantennenanordnung 15 auf wenigstens einer ihrer Seiten Anteile der Steuereinrichtung des Radarsensors 4, vorliegend eine Steuerkomponente 17 für die Teilantennenanordnungen 15, einen Radartransceiver 18 und einen Analog-Digital-Wandler 19, die allesamt in CMOS-Technologie realisiert sind. Aufgrund des auf der Antennenleiterplatte vorgesehenen Analog-DigitalWandlers 19 kann die Verbindungsschnittstelle 20 zu der Hauptleiterplatte 12 digital ausgeführt werden, was parasitäres Rauschen verringert.

Die weiteren Komponenten der Steuereinrichtung des Radarsensors 4 finden sich auf der Hauptleiterplatte 12, wiederum in Form eines CMOS-Chips 21, wobei vorliegend eine zentrale Steuereinheit 22 und eine digitale Signalverarbeitungskomponente 23 zur Vorverarbeitung bzw. Vorauswertung der Radardaten durch den CMOS-Chip 21 realisiert sind. Über eine Kommunikationsschnittstelle 24 zum Bussystem 6 können die Radardaten an die andere Fahrzeugsysteme, insbesondere das Fahrerassistenzsystem 7 mit dem Steuergerät 8, übermittelt werden.

Die Hauptleiterplatte 12 wird vorliegend auch genutzt, um der primären Antennenanordnung zugeordnete Komponenten unterzubringen, vorliegend einen Transceiver 25 für die primäre Antennenanordnung 11, wobei selbstverständlich auch weitere entsprechende Komponenten einer Sende- und Empfangselektronik der primären Antennenanordnung 11 auf der Hauptleiterplatte 12 realisiert werden können, um die Integration weiter zu verbessern. Signale für bzw. von der primären Antennenanordnung 11 können ebenso über die Kommunikationsschnittstelle 24 an andere Verbindungsmittel im Kraftfahrzeug 1 weitergegeben werden, beispielsweise an das Bussystem 6.

Fig. 4 zeigt schematisch eine Aufsicht auf die Leiterplatten 12, 13 eines nicht beanspruchten Beispiels. Dort ist, wie bereits beschrieben, nur eine einzige Antennenleiterplatte 13 vorgesehen, die beidseitig eine Teilantennenanordnung 15 aufweist, welche bevorzugt nach vorne und nach hinten ausgerichtet sind, was dann entsprechend auch für ihre Teilerfassungsbereiche 5 gilt.

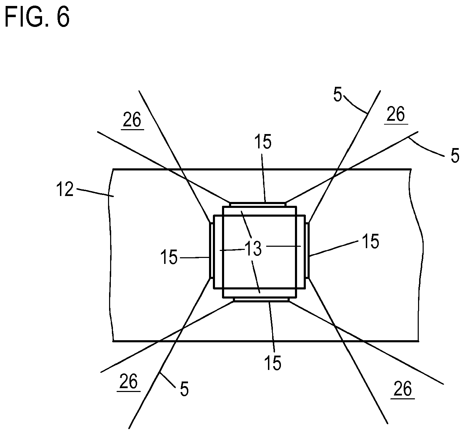

Die Fig. 5 und 6 zeigen nun bevorzugte, modifizierte Ausführungsformen, wobei die einzige Änderung gegenüber der ersten Ausführungsform in der Anzahl, Bestückung und Ausrichtung der Antennenleiterplatten 13 liegt.

Fig. 5 zeigt eine Ausgestaltung, in der drei Antennenleiterplatten 13 auf die Hauptleiterplatte 12 aufgesteckt sind, welche jeweils eine Teilantennenanordnung 15 aufweisen. Die Antennenleiterplatten 13 sind, genau wie die Teilantennenanordnungen 15, gleich ausgebildet, insbesondere dimensioniert, so dass sie nach Art eines gleichseitigen Dreiecks angeordnet werden können. Die Orientierung ist vorliegend so gewählt, dass der Teilerfassungsbereich 5 einer Teilantennenanordnung 15 auf den Rückraum des Kraftfahrzeugs 1 gerichtet ist, die beiden weiteren Teilantennenanordnungen 15 mit ihren Teilerfassungsbereichen 5 jeweils in unterschiedliche Richtungen diagonal nach vorne. Nachdem es sich bei allen Teilantennenanordnungen 15 um solche mit einem weitwinkligen Teilerfassungsbereich 5 handelt, existieren Überlappungsbereiche 26 der Teilerfassungsbereiche 5, welche zur Plausibilisierung und/oder statistischen Auswertung der Radardaten der einzelnen Teilantennenanordnungen 15 genutzt werden können. Insbesondere liegt das Vorfeld des Kraftfahrzeugs 1 bei dieser Ausgestaltung im Teilerfassungsbereich 5 zweier Teilantennenanordnungen 15.

Fig. 6 zeigt schließlich eine dritte Ausführungsform, in der vier gleich ausgebildete Antennenleiterplatten 13 nach Art eines Quadrats auf die Hauptleiterplatte 12 aufgesteckt sind. Die wiederum mit weitwinkligen Teilerfassungsbereichen 5 ausgebildeten Teilantennenanordnungen 15 sind dabei auf das Vorfeld, den Rückraum und die Seiten des Kraftfahrzeugs 1 gerichtet, wobei wiederum Überlappungsbereiche 26 entstehen, die zur gegenseitigen Plausibilisierung von Radardaten und/oder zur statistischen Auswertung genutzt werden können.

Im Fall der zweiten und der dritten Ausführungsform wird also das Umfeld des Kraftfahrzeugs horizontal in einem kompletten 360°-Winkelbereich durch einen einzigen, in das Antennen-Dachmodul 3 integrierten Radarsensor 4 abgetastet.

## Patentansprüche

1. Antennen-Dachmodul (3) für ein Kraftfahrzeug (1), aufweisend wenigstens eine primäre Antennenanordnung (11), insbesondere zum Empfang von Radioprogrammen, wobei in das Dachmodul zusätzlich zu der primären Antennenanordnung (11) wenigstens eine Radarantennenanordnung (14) eines Radarsensors (4) integriert ist,
**dadurch gekennzeichnet,**
**dass** die Antennenelemente (16) der Radarantennenanordnung (14) auf wenigstens drei Antennenleiterplatten (13) der Radarantennenanordnung (14) angeordnet sind, wobei drei Antennenleiterplatten (13) nach Art eines Dreiecks mit nach außen weisenden Teilantennenanordnungen (15) angeordnet sind und/oder vier Antennenleiterplatten (13) nach Art eines Quadrats mit nach außen weisenden Teilantennenanordnungen (15) angeordnet sind.

2. Antennen-Dachmodul nach Anspruch 1,
**dadurch gekennzeichnet,**
**dass** der Erfassungsbereich der Radarantennenanordnung (14) in der Horizontalen wenigstens einen Winkelbereich von 300°, bevorzugt von 360°, umfasst.

3. Antennen-Dachmodul nach Anspruch 1 oder 2,
**dadurch gekennzeichnet,**
**dass** es ein Gehäuse aus Kunststoff, innerhalb dessen die Antennenanordnungen angeordnet sind, aufweist.

4. Antennen-Dachmodul nach einem der vorangehenden Ansprüche,
**dadurch gekennzeichnet,**
**dass** wenigstens eine Steuerkomponente (17) des Radarsensors (4) für die Radarantennenanordnung (14) und/oder wenigstens ein Radartransceiver (18) auf den Antennenleiterplatten (13) angeordnet sind.

5. Antennen-Dachmodul nach Anspruch 4,
**dadurch gekennzeichnet,**
**dass** bei auf den Antennenleiterplatten (13) angeordnetem Radartransceiver (18) auch wenigstens ein Analog-Digital-Wandler (19) auf den Antennenleiterplatten (13) realisiert ist.

6. Antennen-Dachmodul nach einem der vorangehenden Ansprüche,
**dadurch gekennzeichnet,**
**dass** die drei Antennenleiterplatten (13) nach Art eines gleichseitigen Dreiecks angeordnet sind.

7. Antennen-Dachmodul nach einem der vorangehenden Ansprüche,
**dadurch gekennzeichnet,**
**dass** die Antennenleiterplatten (13) auf einer insbesondere horizontal angeordneten Hauptleiterplatte (12) des Radarsensors (4) befestigt, insbesondere aufgesteckt, sind, die wenigstens einen Teil der Steuereinrichtung des Radarsensors (4) umfasst.

8. Antennen-Dachmodul nach Anspruch 7,
**dadurch gekennzeichnet,**
**dass** die Hauptleiterplatte (12) eine Kommunikationsschnittstelle (24) des Radarsensors (4) zu einem Bussystem (6) des Kraftfahrzeugs (1) und/oder eine digitale Signalverarbeitungskomponente (23) des Radarsensors (4) aufweist.

9. Antennen-Dachmodul nach einem der vorangehenden Ansprüche,
**dadurch gekennzeichnet,**
**dass** der Radarsensor (4) vollständig in das Antennen-Dachmodul integriert ist.

10. Antennen-Dachmodul nach einem der vorangehenden Ansprüche,
**dadurch gekennzeichnet,**
**dass** wenigstens ein bzw. der Radartransceiver (18) des Radarsensors (4), insbesondere der gesamte Radarsensor (4), in Halbleitertechnologie, insbesondere CMOS-Technologie, realisiert ist.

11. Kraftfahrzeug (1), aufweisend ein Antennen-Dachmodul nach einem der vorangehenden Ansprüche.

12. Kraftfahrzeug (1) nach Anspruch 11,
**dadurch gekennzeichnet,**
**dass** das Kraftfahrzeug (1) zur Detektion von Umgebungsobjekten im Nahbereich wenigstens einen im unteren Bereich des Kraftfahrzeugs (1) verbauten Ultraschallsensor (9) aufweist.

## Claims

1. Roof-top antenna module (3) for a motor vehicle (1), having at least one primary antenna arrangement (11), in particular to receive radio programmes, wherein at least one radar antenna arrangement (14) of a radar sensor (4) is integrated in the roof module in addition to the primary antenna arrangement (11),
**characterised in that**
the antenna elements (16) of the radar antenna arrangement (14) are arranged on at least three antenna circuit boards (13) of the radar antenna arrangement (14), wherein three antenna circuit boards (13) are arranged in the form of a triangle with outward-pointing partial antenna arrangements (15) and/or four antenna circuit boards (13) are arranged in the form of a square with outward-pointing partial antenna arrangements (15).

2. Roof-top antenna module according to claim 1,
**characterised in**
**that**,the horizontal scope of the radar antenna arrangement (14) comprises at least an angle range of at least 300°, preferably 360°.

3. Roof-top antenna module according to claim 1 or 2,
**characterised in**
**that**, it has a plastic housing within which the antenna arrangements are arranged.

4. Roof-top antenna module according to any of the preceding claims,
**characterised in**
**that**, at least one control component (17) of the radar sensor (4) for the radar antenna arrangement (14) and/or at least one radar transceiver (18) is arranged on the antenna circuit boards (13).

5. Roof-top antenna module according to Claim 4,
**characterised in**
**that**, with a radar transceiver (18) arranged on the antenna circuit boards (13), at least one analogue-to-digital converter (19) is also implemented on the antenna circuit boards (13).

6. Roof-top antenna module according to any of the preceding claims,
**characterised in**
**that**, the three antenna circuit boards (13) are arranged in the form of an equilateral triangle.

7. Roof-top antenna module according to any of the preceding claims,
**characterised in**
**that**, the antenna circuit boards (13) are fastened to, in particular inserted in, a main circuit board (12), in particular arranged horizontally, of the radar sensor (4), which comprises at least part of the control device of the radar sensor (4).

8. Roof-top antenna module according to Claim 7,
**characterised in**
**that**, the main circuit board (12) has a communication interface (24) of the radar sensor (4) to a bus system (6) of the motor vehicle (1) and/or a digital signal processing component (23) of the radar sensor (4).

9. Roof-top antenna module according to any of the preceding claims,
**characterised in**
**that**, the radar sensor (4) is fully integrated into the roof-top antenna module.

10. Roof-top antenna module according to any of the preceding claims,
**characterised in**
**that**, at least one of the radar transceivers (18) or, as appropriate, the radar transceiver (18) of the radar sensor (4), in particular the entire radar sensor (4), is implemented using semiconductor technology, in particular CMOS technology.

11. Motor vehicle (1) having a roof-top antenna module according to any of the preceding claims.

12. Motor vehicle (1) according to Claim 11,
**characterised in**
**that**, the motor vehicle (1) has at least one ultrasonic sensor (9) installed in the lower section of the motor vehicle (1) for detecting surrounding objects in close range.

## Revendications

1. Module de toit d'antennes (3) pour un véhicule automobile (1), présentant au moins un dispositif d'antennes primaire (11), en particulier destiné à la réception de programmes de radio, dans lequel au moins un dispositif d'antennes radar (14) d'un capteur radar (4) est intégré dans le module de toit, en plus du dispositif d'antennes primaire (11),
**caractérisé en ce que**
les éléments d'antennes (16) du dispositif d'antennes radar (14) sont disposés sur au moins trois circuits imprimés d'antennes (13) du dispositif d'antennes radar (14), dans lequel trois circuits imprimés d'antennes (13) sont disposées à la manière d'un triangle avec des dispositifs de sous-antennes (15) orientés vers l'extérieur et/ou quatre circuits imprimés d'antennes (13) sont disposées à la manière d'un carré avec des dispositifs de sous-antennes (15) orientés vers l'extérieur.

2. Module de toit d'antennes selon la revendication 1,
**caractérisé en ce que**
la zone de détection du dispositif d'antennes radar (14) comprend dans le plan horizontal au moins une zone d'angle de 300°, de préférence de 306°.

3. Module de toit d'antennes selon la revendication 1 ou 2,
**caractérisé en ce qu'**
il présente un boîtier en plastique, au sein duquel les dispositifs d'antennes sont disposés.

4. Module de toit d'antennes selon l'une quelconque des revendications précédentes,
**caractérisé en ce que**
au moins un composant (17) du capteur radar (4) pour le dispositif d'antennes radar (14) et/ou au moins un émetteur-récepteur radar (18) sont disposés sur les circuits imprimés d'antennes (13).

5. Module de toit d'antennes selon la revendication 4,
**caractérisé en ce que**
dans le cas de l'émetteur-récepteur radar (18) disposé sur les circuits imprimés d'antennes (13), au moins un convertisseur analogique-numérique (19) est aussi réalisé sur les circuits imprimés d'antennes (13).

6. Module de toit d'antennes selon l'une quelconque des revendications précédentes,
**caractérisé en ce que**
les trois circuits imprimés d'antennes (13) sont disposés à la manière d'un triangle équilatéral.

7. Module de toit d'antennes selon l'une quelconque des revendications précédentes,
**caractérisé en ce que**
les circuits imprimés d'antennes (13) sont fixées, en particulier enfichées, sur un circuit imprimé principal (12) du capteur radar (4) disposé en particulier de manière horizontale, qui comprend au moins une partie du dispositif de commande du capteur radar (4).

8. Module de toit d'antennes selon la revendication 7,
**caractérisé en ce que**
le circuit imprimé principal (12) présente un tronçon de communication (24) entre le capteur radar (4) et un système de bus (6) du véhicule automobile (1) et/ou un composant de traitement de signal numérique (23) du capteur radar (4).

9. Module de toit d'antennes selon l'une quelconque des revendications précédentes,
**caractérisé en ce que**
le capteur radar (4) est complètement intégré dans le module de toit d'antennes.

10. Module de toit d'antennes selon l'une quelconque des revendications précédentes,
**caractérisé en ce que**
au moins un voire l'émetteur-récepteur radar (18) du capteur radar (4), en particulier le capteur radar (4) dans l'ensemble, est réalisé dans la technologie des semiconducteurs, en particulier la technologie CMOS.

11. Véhicule automobile (1), présentant un module de toit d'antennes selon l'une quelconque des revendications précédentes.

12. Véhicule automobile (1) selon la revendication 11,
**caractérisé en ce que**
le véhicule automobile (1) présente au moins un capteur ultrasonique (9) installé dans une zone inférieure du véhicule automobile (1) destiné à la détection des objets environnants à proximité.
